# EUROPÄISCHE PATENTSCHRIFT

(11) **EP 3 083 313 B1**
(45) Veröffentlichungstag und Bekanntmachung des Hinweises auf die Patenterteilung: **27.12.2017**
(21) Anmeldenummer: 14821097.4
(22) Anmeldetag: 12.12.2014
(51) Int. Cl.: B60K 15/077, B60K 15/03

(54) **KRAFTSTOFF-SAMMELEINRICHTUNG EINES KRAFTFAHRZEUGES**
FUEL COLLECTING DEVICE OF A MOTOR VEHICLE
COLLECTEUR DE CARBURANT D'UN VÉHICULE AUTOMOBILE

(30) Priorität: 17.12.2013 DE 102013226291
(43) Veröffentlichungstag der Anmeldung: 26.10.2016
(73) Patentinhaber: Continental Automotive GmbH, 30165 Hannover (DE)
(72) Erfinder: GERHARDT, Marc, 44287 Dortmund (DE)
(86) Internationale Anmeldenummer: PCT/EP2014/077490
(87) Internationale Veröffentlichungsnummer: WO 2015/091236

(56) Entgegenhaltungen:
- EP-A1- 1 619 065
- DE-A1- 19 857 863
- DE-A1-102006 032 101
- DE-A1-102007 032 057
- DE-C1- 19 834 653
- US-A1- 2012 181 293

## Beschreibung

Die Erfindung betrifft eine Kraftstoff-Sammeleinrichtung eines Kraftfahrzeuges mit einem Schwalltopf, mit einem im Bodenbereich des Schwalltopfes angeordneten Vorfilter und mit aus Kunststoff gefertigten Strukturen des Vorfilters.

Solche Kraftstoff-Sammeleinrichtungen werden in heutigen Kraftfahrzeugen über ein Halteelement am Boden eines Kraftstoffbehälters befestigt und sind aus der Praxis bekannt. Bei diesen Sammeleinrichtungen wird der Kraftstoff durch den Vorfilter grob gereinigt, bevor er in den Schwalltopf gelangt. Ziel ist es die nachgeschalteten Funktionselemente, wie beispielsweise ein Bodenventil oder eine Saugstrahlpumpe, vor einem Ausfall zu schützen. In dem Schwalltopf wird der Kraftstoff gesammelt und von einer Kraftstoff-Fördereinrichtung zu einer Brennkraftmaschine des Kraftfahrzeuges gefördert. Funktionsbedingt ist es notwendig, dass der Vorfilter so nahe wie möglich am Boden des Kraftstoffbehälters angeordnet ist. Durch die Verwendung eines Halteelementes unter dem Schwalltopf wird dieser angehoben und die Förderung des Kraftstoffs in dem Schwalltopf nachteilig verändert.

Der Vorfilter lässt sich von aus Kunststoff gefertigten Strukturen unmittelbar am Schwalltopf erzeugen. Eine Kompensation durch Verlängerung der Vorfilterstrukturen im Schwalltopf in eine Vertiefung des Halteelementes verschlechtert die Filterleistung in Bezug auf die Größe der Schmutzteilchen.

Kraftstoff-Sammeleinrichtungen mit den Merkmalen des Oberbegriffs des Anspruchs 1 sind aus der DE 198 34 653 C1 und der EP 1 619 065 A1 bekannt.

Der Erfindung liegt das Problem zugrunde, eine Kraftstoff-Sammeleinrichtung der eingangs genannten Art so weiter zu bilden, dass sie eine besonders hohe Filterleistung des Vorfilters ermöglicht und möglichst einfach zu fertigen ist. Dieses Problem wird erfindungsgemäß dadurch gelöst, dass der Vorfilter auf einander gegenüberstehenden Bauteilen jeweils angeordnete Teilstrukturen aufweist und dass die Teilstrukturen der Bauteile einander gegenüberstehen.

Durch diese Gestaltung sind die für die Filterung erforderlichen Strukturen auf zwei unterschiedliche Bauteile aufgeteilt. Die Teilstrukturen der einzelnen Bauteile bilden damit zusammen die Strukturen des Vorfilters. Die Teilstrukturen können dank der Erfindung jeweils mit geringer Tiefe erzeugt werden, da sie zusammen die vorgesehene Tiefe bilden. Die Teilstrukturen haben hierdurch eine besonders hohe mechanische Stabilität. Dies ermöglicht eine hohe Filterleistung des Vorfilters. Die Kraftstoff-Sammeleinrichtung ist jedoch dank der Erfindung besonders einfach zu fertigen, da besonders feine Strukturen des Vorfilters vermieden werden.

Die Anzahl an zu montierenden Bauteilen lässt sich gemäß einer anderen vorteilhaften Weiterbildung der Erfindung besonders gering halten, wenn die einen Teilstrukturen auf dem Schwalltopf und die anderen Teilstrukturen auf einem zur Befestigung des Schwalltopfes an einem Boden eines Kraftstoffbehälters vorgesehenen Halteelement angeordnet sind. Durch diese Gestaltung ist kein eigenständig zu montierendes Bauteil für den Vorfilter erforderlich, da sämtliche Bauteile des Vorfilters von dem Halteelement und dem Schwalltopf erzeugt werden. Ein weiterer Vorteil dieser Gestaltung besteht darin, dass Halteelement und Schwalltopf ohnehin genau zueinander ausgerichtet sind, so dass die vorgesehene Anordnung der Teilstrukturen zueinander keinen zusätzlichen Aufwand erfordert. Die Teilstrukturen sind vorzugsweise einstückig mit dem Kunststoff des Schwalltopfes und des Halteelementes gefertigt.

Die Fertigung des Vorfilters gestaltet sich gemäß einer anderen vorteilhaften Weiterbildung der Erfindung besonders einfach, wenn die Teilstrukturen als im Spritzgussverfahren erzeugte Erhebungen oder Vertiefungen ausgebildet sind.

Die Teilstrukturen könnten beispielsweise ineinander greifen und hierdurch besonders kleine Kanäle erzeugen. Dies erfordert jedoch enge Toleranzen der Teilstrukturen. Enge Toleranzen der Teilstrukturen lassen sich gemäß einer anderen vorteilhaften Weiterbildung der Erfindung einfach vermeiden, wenn die Teilstrukturen aufeinander liegen. Im einfachsten Fall stützen sich die Teilstrukturen mit ihren freien Enden aneinander ab.

Die Teilstrukturen könnten beispielsweise Zapfen, Stege oder dergleichen aufweisen. Eine wirksame Vorfilterung lässt sich gemäß einer anderen vorteilhaften Weiterbildung der Erfindung einfach erreichen, wenn die Teilstrukturen bogenförmig gestaltet sind.

Ein Labyrinth an Kanälen im Vorfilter lässt sich gemäß einer anderen vorteilhaften Weiterbildung der Erfindung einfach erzeugen, wenn die Bogenform der beiden einander gegenüberstehenden Teilstrukturen zueinander entgegengesetzt angeordnet ist .

Die Kraftstoff-Sammeleinrichtung gestaltet sich gemäß einer anderen vorteilhaften Weiterbildung der Erfindung besonders kompakt, wenn die Teilstrukturen im Bodenbereich des Schwalltopfes ringförmig gestaltet sind und wenn im radial inneren Bereich der Teilstrukturen ein Bodenventil angeordnet ist.

Drosselstellen beim Einströmen des Kraftstoffs zu dem Vorfilter lassen sich gemäß einer anderen vorteilhaften Weiterbildung der Erfindung weitgehend vermeiden, wenn das Halteelement im Bereich des Vorfilters eben gestaltet ist und wenn der Schwalltopf eine Ausnehmung zum Einströmen des Kraftstoffs zu dem Vorfilter hat. Durch diese Gestaltung kann das Halteelement möglichst dünnwandig gestaltet sein, wie für die mechanische Festigkeit erforderlich ist. Die Ausnehmung im Schwalltopf ermöglicht die Führung des aus dem Kraftstoffbehälter anströmenden Kraftstoffs zu dem Vorfilter.

Die Teilstrukturen des Halteelementes ermöglichen gemäß einer anderen vorteilhaften Weiterbildung der Erfindung eine hohe Filterleistung, wenn die als Vertiefungen in dem Halteelement ausgebildeten Teilstrukturen sich zu dem radial inneren Bereich des Vorfilters hin verjüngen und länger sind als die Teilstrukturen des Schwalltopfes. Zudem kann hierdurch das Halteelement besonders dünnwandig gestaltet sein.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Fig. 1: eine perspektivische Darstellung einer Kraftstoff-Sammeleinrichtung,
- Fig. 2: eine Schnittdarstellung durch die Kraftstoff-Sammeleinrichtung aus Figur 1 entlang der Linie II - II,
- Fig. 3: eine Draufsicht auf ein Halteelement der Kraftstoff-Sammeleinrichtung aus Figur 1,
- Fig. 4: eine Ansicht von unten auf einen Schwalltopf der Kraftstoff-Sammeleinrichtung aus Figur 1.

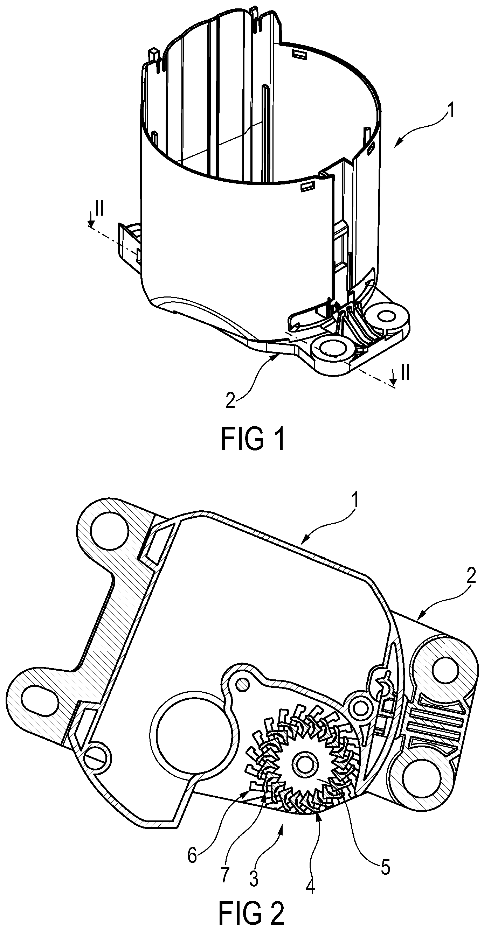

Figur 1 zeigt eine Kraftstoff-Sammeleinrichtung für ein Kraftfahrzeug mit einem Schwalltopf 1 zum Sammeln von Kraftstoff und mit einem Halteelement 2. Das Halteelement 2 dient dazu, an einem nicht dargestellten Boden eines Kraftstoffbehälters befestigt zu werden. Aus dem Schwalltopf 1 wird Kraftstoff abgesaugt und zu einer ebenfalls nicht dargestellten Brennkraftmaschine des Kraftfahrzeuges gefördert.

Figur 2 zeigt eine Schnittdarstellung durch die Kraftstoff-Sammeleinrichtung aus Figur 1 entlang der Linie II - II. Hierbei ist zu erkennen, dass zwischen dem Halteelement 2 und dem Schwalltopf 1 ein Vorfilter 3 angeordnet ist. Der Vorfilter 3 weist eine Vielzahl von aus Kunststoff gefertigten Strukturen 4 auf, durch die Kraftstoff von radial außen in einen radial inneren Bereich 5 strömt und dabei gefiltert wird. Die Strukturen 4 des Vorfilters 3 sind als übereinander liegende kranzförmige Teilstrukturen 6, 7 ausgebildet. Die kranzförmigen Teilstrukturen 6, 7 weisen jeweils Bogenform auf, wobei die zwei übereinander liegende Bogenformen zueinander entgegengesetzt ausgerichtet sind.

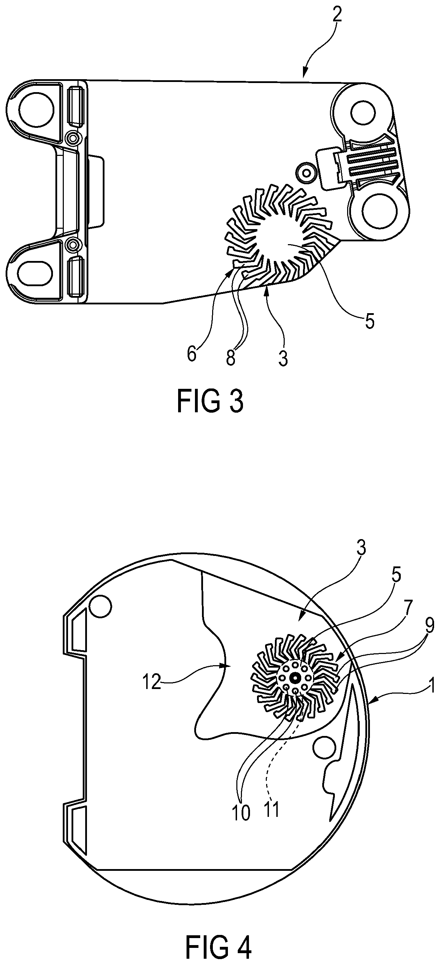

Figur 3 zeigt eine Draufsicht auf das Halteelement 2 der Kraftstoff-Sammeleinrichtung aus Figur 1. Hierbei ist zu erkennen, dass das Halteelement 2 im Bereich des Vorfilters 3 eben gestaltet ist. Das Haltelement 2 weist nur eine der kranzförmigen Teilstrukturen 6 aus Figur 2 auf. Die in dem Haltelement 2 angeordneten Teilstrukturen 6 sind als kanalartige Vertiefungen 8 in dem Halteelement 2 ausgebildet. Diese kanalartigen Vertiefungen 8 verjüngen sich zu dem radial inneren Bereich 5 des Vorfilters 3 hin.

Figur 4 zeigt den Schwalltopf 1 aus Figur 1 in einer Ansicht von unten und damit einer Ansicht von dem Halteelement 2 aus gesehen. Hierbei ist zu erkennen, dass der Schwalltopf 1 ebenfalls nur eine der kranzförmigen Teilstrukturen 7 des Vorfilters 3 aus Figur 2 aufweist. Die kranzförmigen Teilstrukturen 7 am Schwalltopf 1 sind von aus Kunststoff im Spritzgussverfahren gefertigten Erhebungen 9 gebildet. Im radial inneren Bereich 5 der Teilstrukturen 7 sind Öffnungen 10 eines Bodenventils 11 angeordnet. Über diese Öffnungen 10 des Bodenventils 11 gelangt der von dem Vorfilter 3 aus Figur 2 gefilterte Kraftstoff in den Schwalltopf 1. Weiterhin hat der Schwalltopf 1 eine die Teilstrukturen 7 umschließende Ausnehmung 12 zur Führung des Kraftstoffs zu dem Vorfilter 3.

## Patentansprüche

1. Kraftstoff-Sammeleinrichtung eines Kraftfahrzeuges mit einem Schwalltopf (1), mit einem im Bodenbereich des Schwalltopfes (1) angeordneten Vorfilter (3) und mit aus Kunststoff gefertigten Strukturen (4) des Vorfilters (3), **dadurch gekennzeichnet, dass** der Vorfilter (3) auf einander gegenüberstehenden Bauteilen jeweils angeordnete Teilstrukturen (6, 7) aufweist und dass die Teilstrukturen (6, 7) der Bauteile einander gegenüberstehen.

2. Kraftstoff-Sammeleinrichtung nach Anspruch 1, **dadurch gekennzeichnet, dass** die einen Teilstrukturen (7) auf dem Schwalltopf (1) und die anderen Teilstrukturen (6) auf einem zur Befestigung des Schwalltopfes (1) an einem Boden eines Kraftstoffbehälters vorgesehenen Halteelement (2) angeordnet sind.

3. Kraftstoff-Sammeleinrichtung nach Anspruch 1 oder 2, **dadurch gekennzeichnet, dass** die Teilstrukturen (6, 7) als im Spritzgussverfahren erzeugte Erhebungen (9) oder Vertiefungen (8) ausgebildet sind.

4. Kraftstoff-Sammeleinrichtung nach einem der Ansprüche 1 bis 3, **dadurch gekennzeichnet, dass** die Teilstrukturen (6, 7) aufeinander liegen.

5. Kraftstoff-Sammeleinrichtung nach einem der Ansprüche 1 bis 4, **dadurch gekennzeichnet, dass** die Teilstrukturen (6, 7) bogenförmig gestaltet sind.

6. Kraftstoff-Sammeleinrichtung nach Anspruch 5, **dadurch gekennzeichnet, dass** die Bogenform der beiden einander gegenüberstehenden Teilstrukturen (6, 7) zueinander entgegengesetzt angeordnet ist.

7. Kraftstoff-Sammeleinrichtung nach einem der Ansprüche 2 bis 6, **dadurch gekennzeichnet, dass** die Teilstrukturen (7) im Bodenbereich des Schwalltopfes (1) ringförmig gestaltet sind und dass im radial inneren Bereich (5) der Teilstrukturen (7) ein Bodenventil (11) angeordnet ist.

8. Kraftstoff-Sammeleinrichtung nach einem der Ansprüche 2 bis 7, **dadurch gekennzeichnet, dass** das Halteelement (2) im Bereich des Vorfilters (3) eben gestaltet ist und dass der Schwalltopf (1) eine Ausnehmung (12) zum Einströmen des Kraftstoffs zu dem Vorfilter (3) hat.

9. Kraftstoff-Sammeleinrichtung nach einem der Ansprüche 3 bis 8, **dadurch gekennzeichnet, dass** die als Vertiefungen (8) in dem Halteelement (2) ausgebildeten Teilstrukturen (6) sich zu dem radial inneren Bereich (5) des Vorfilters (3) hin verjüngen und länger sind als die Teilstrukturen (7) des Schwalltopfes (1).

## Claims

1. Fuel collection device for a motor vehicle having a splash pot (1), having a prefilter (3) which is arranged in the bottom region of the splash pot (1), and having structures (4) of the prefilter (3) which are manufactured from plastic, **characterized in that** the prefilter (3) has part structures (6, 7) which are arranged in each case on components which lie opposite one another, and **in that** the part structures (6, 7) of the components lie opposite one another.

2. Fuel collection device according to Claim 1, **characterized in that** some part structures (7) are arranged on the splash pot (1) and the other part structures (6) are arranged on a holding element (2) which is provided on a bottom of a fuel tank for fastening the splash pot (1).

3. Fuel collection device according to Claim 1 or 2, **characterized in that** the part structures (6, 7) are configured as elevations (9) or depressions (8) which are produced using the injection molding process.

4. Fuel collection device according to one of Claims 1 to 3, **characterized in that** the part structures (6, 7) lie on one another.

5. Fuel collection device according to one of Claims 1 to 4, **characterized in that** the part structures (6, 7) are of arcuate design.

6. Fuel collection device according to Claim 5, **characterized in that** the arcuate shape of the two part structures (6, 7) which lie opposite one another is arranged so as to be opposed to one another.

7. Fuel collection device according to one of Claims 2 to 6, **characterized in that** the part structures (7) are of annular design in the bottom region of the splash pot (1), and **in that** a bottom valve (11) is arranged in the radially inner region (5) of the part structures (7).

8. Fuel collection device according to one of Claims 2 to 7, **characterized in that** the holding element (2) is of planar design in the region of the prefilter (3), and **in that** the splash pot (1) has a recess (12) for the inflow of the fuel to the prefilter (3) .

9. Fuel collection device according to one of Claims 3 to 8, **characterized in that** the part structures (6) which are configured as depressions (8) in the holding element (2) taper toward the radially inner region (5) of the prefilter (3) and are longer than the part structures (7) of the splash pot (1).

## Revendications

1. Collecteur de carburant d'un véhicule automobile avec un pot de brise-jet (1), avec un préfiltre (3) disposé dans la région du fond du pot de brise-jet (1) et avec des structures (4) du préfiltre (3) fabriquées en matière plastique, **caractérisé en ce que** le préfiltre (3) présente des structures partielles (6, 7) disposées respectivement sur des composants opposés l'un à l'autre et **en ce que** les structures partielles (6, 7) des composants sont l'une en face de l'autre.

2. Collecteur de carburant selon la revendication 1, **caractérisé en ce que** les unes structures partielles (7) sont disposées sur le pot de brise-jet (4) et les autres structures partielles (6) sont disposées sur un élément de support (2) prévu pour la fixation du pot de brise-jet (1) à un fond d'un réservoir de carburant.

3. Collecteur de carburant selon la revendication 1 ou 2, **caractérisé en ce que** les structures partielles (6, 7) sont réalisées sous la forme de saillies (9) ou de creux (8) formé(e)s par un procédé de coulée par injection.

4. Collecteur de carburant selon l'une quelconque des revendications 1 à 3, **caractérisé en ce que** les structures partielles (6, 7) sont situées l'une sur l'autre.

5. Collecteur de carburant selon l'une quelconque de revendications 1 à 4, **caractérisé en ce que** les structures partielles (6, 7) sont configurées en forme d'arc.

6. Collecteur de carburant selon la revendication 5, **caractérisé en ce que** la forme d'arc des deux structures partielles opposées l'une à l'autre (6, 7) est disposée en sens contraire l'une de l'autre.

7. Collecteur de carburant selon l'une quelconque des revendications 2 à 6, **caractérisé en ce que** les structures partielles (7) dans la région du fond du pot de brise-jet (1) sont de forme annulaire et **en ce qu'**une soupape de fond (11) est disposée dans la région radialement intérieure (5) des structures partielles (7).

8. Collecteur de carburant selon l'une quelconque des revendications 2 à 7, **caractérisé en ce que** l'élément de support (2) est de forme plane dans la région du préfiltre (3) et **en ce que** le pot de brise-jet (1) comporte un évidement (12) pour l'arrivée du carburant au préfiltre (3).

9. Collecteur de carburant selon l'une quelconque des revendications 3 à 8, **caractérisé en ce que** les structures partielles (6) réalisées en forme de creux (8) dans l'élément de support (2) se rétrécissent en direction de la région radialement intérieure (5) du préfiltre (3) et sont plus longues que les structures partielles (7) du pot de brise-jet (1) .
